# FASCICULE DE BREVET EUROPEEN

(11) **EP 3 461 601 B1**
(45) Date de publication et mention de la délivrance du brevet: **19.08.2020**
(21) Numéro de dépôt: 18177854.9
(22) Date de dépôt: 14.06.2018
(51) Int. Cl.: B25J 21/02, B25J 19/00

(54) **JOINT D'ÉTANCHÉITÉ ANTI-RÉTENTION POUR PANNEAU SE FIXANT À UN CADRE PORTEUR DÉLIMITANT UNE ENCEINTE CONFINÉE**
DICHTUNGSFUGE GEGEN WASSEREINLAGERUNG FÜR PANEEL, DAS AUF EINEM HALTERAHMEN BEFESTIGT WIRD, DER EINEN GESCHLOSSENEN RAUM BEGRENZT
ANTI-RETENTION SEAL FOR PANEL ATTACHED TO A SUPPORT FRAME DEFINING AN ENCLOSED CHAMBER

(30) Priorité: 16.06.2017 FR 1755500
(43) Date de publication de la demande: 03.04.2019
(73) Titulaire: Commissariat à l'énergie atomique et aux énergies alternatives, 75015 Paris (FR)
(72) Inventeur: PARRENIN, Cédric, 21120 Til-Châtel (FR); BAY, Raphael, 21800 Quetigny (FR)
(74) Mandataire: Brevalex

(56) Documents cités:
- EP-A1- 0 430 687
- EP-A2- 1 095 607
- WO-A1-2010/115962
- US-A- 3 088 627

## Description

### DOMAINE TECHNIQUE

L'invention concerne une enceinte fermée de type boîte à gants pour manipuler de la matière radioactive.

### ÉTAT DE LA TECHNIQUE ANTÉRIEURE

Une enceinte de type boîte à gants est formée d'une structure porteuse rigide ou carcasse généralement parallélépipédique, sur laquelle sont rapportés des panneaux pouvant être transparents fixés de manière étanche à cette structure, un tel agencement étant décrit dans la demande de brevet FR3021076.

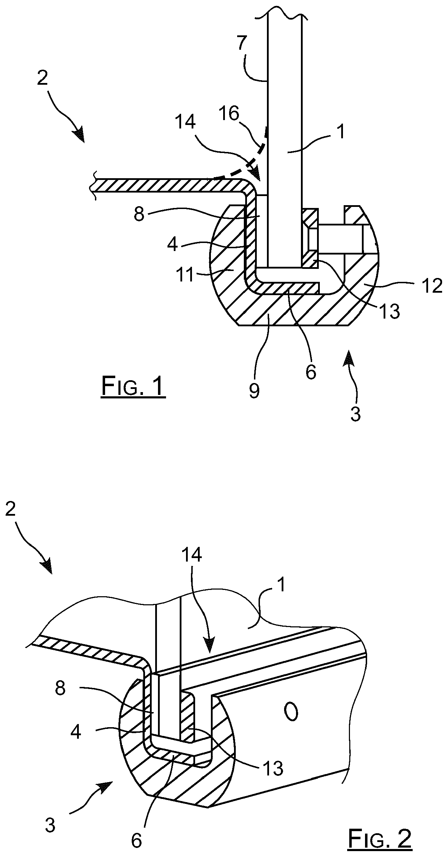

Dans cet agencement représenté sur les figures 1 et 2, le bord d'un panneau 1 est appliqué contre un profilé 2 délimitant une structure porteuse par des barrettes serre-joints 3, ce profilé ayant un flanc d'appui 4 prolongé par un rebord 6. Le panneau 1 est en appui par sa face interne 7 contre le flanc 4 du profilé, par l'intermédiaire d'un joint d'étanchéité 8, l'ensemble étant comprimé par la barrette 3.

Cette barrette serre-joint 3 présente une section transversale en forme de U comprenant une base 9 prolongée par deux flancs parallèles 11, 12, cette base étant en vis-à-vis du rebord 6, le flanc fixe 11 étant en appui sur le flanc d'appui 4 du profilé, et le flanc de serrage 12 étant en vis-à-vis de la face externe du panneau.

Ce flanc de serrage 12 comporte du côté de sa face interne un tampon d'appui ou contre-cadre 13 porté par des vis de serrage et qui répartit uniformément l'effort de serrage, pour homogénéiser la contrainte dans le panneau.

Comme visible sur les figures 1 et 2, l'assemblage constitué par le panneau 1, le joint 8 et le profilé 2 délimite une rigole intérieure 14 s'étendant dans l'enceinte. Le fond de cette rigole 14 correspond à la tranche supérieure du joint 8 et les côtés de cette rigole sont délimités par le panneau 1 et par le flanc 4 du profilé.

Cette rigole intérieure 14 est pénalisante en ce qu'elle constitue une niche de rétention importante pour de la matière nucléaire. Une possibilité consiste à ajouter lors de la mise en service de la boîte à gant, un ruban adhésif d'aluminium 16 ayant un bord collé au profilé 2 et son autre bord collé à la face interne du panneau 1 pour couvrir cette rigole afin d'éviter qu'elle ne constitue une zone de rétention.

Lorsque le panneau doit être changé, il est alors nécessaire de retirer cet adhésif, ce qui est particulièrement fastidieux. En effet, le remplacement d'un tel panneau est réalisé sans rupture de confinement, en fixant le bord d'une enveloppe formant sac à la boîte à gant autour du panneau à remplacer, pour désolidariser le panneau à remplacer de la structure et le placer au niveau du fond de l'enveloppe formant sac.

L'enveloppe formant sac est alors sertie au voisinage du panneau retiré et au voisinage de la boîte à gants, puis coupée entre ces sertissages pour former une portion sertie qui renferme le panneau retiré, et une autre portion sertie qui ferme l'ouverture de la boîte à gant.

La partie d'enveloppe qui ferme l'ouverture est alors placée du côté intérieur de la boîte, ce qui permet de rapporter le nouveau panneau sur l'ouverture et de l'y fixer. La partie d'enveloppe restante située à l'intérieur de l'enceinte est alors tirée vers l'intérieur de la boîte, par un opérateur agissant depuis l'extérieur avec des gants traversant le nouveau panneau. Le serrage des barrettes serre-joints peut alors être réalisé.

L'adhésif 16 couvrant la rigole 14 doit ainsi être retiré avant remplacement du panneau. En pratique, un opérateur agit depuis l'extérieur en ayant engagé ses bras dans des gants portés par des ouvertures du panneau, pour accéder à la région de rigole interne afin d'en retirer l'adhésif en utilisant des ustensiles qu'il manipule avec ses mains gantées. Cette opération est d'autant plus malcommode qu'elle doit être réalisée le long de tout le pourtour du panneau à remplacer.

Le but de l'invention est d'apporter une solution pour remédier à cet inconvénient.

Les documents WO2010/115962A1, US3088627A et EP0430687A1 montrent également des joints d'étanchéité d'une boîte à gant.

### EXPOSÉ DE L'INVENTION

L'invention est définie dans la revendication 1. A cet effet, l'invention a pour objet un joint d'étanchéité d'un panneau de boîte à gant, comprenant une première face de contact et une seconde face de contact parallèles l'une à l'autre et destinées à être en appui contre un profilé de la boîte à gant et contre une face interne du panneau, ce joint comprenant un bord circonférentiel intérieur pourvu d'un rebord dépassant au-delà de la première face.

Avec cette solution, le rebord dépassant au-delà de la première face ferme l'emplacement de la rigole interne, de sorte qu'une telle rigole interne ne se forme pas. Il n'est donc plus nécessaire de prévoir un adhésif à ajouter à l'intérieur de la boîte à gant le long de la bordure délimitée par le profilé de serrage et le panneau rapporté.

L'invention a également pour objet un joint ainsi défini, dans lequel le rebord présente une forme en quart de rond.

L'invention a également pour objet un joint ainsi défini, dans lequel le rebord comprenant une première lèvre dépassant de la première face de contact et une seconde lèvre dépassant de la seconde face de contact.

L'invention a également pour objet un joint ainsi défini, comprenant un bord circonférentiel extérieur prolongé par une jupe s'étendant perpendiculairement à la seconde face de contact en dépassant au-delà de cette seconde face de contact pour entourer et enserrer la tranche du panneau sur toute sa circonférence.

L'invention a également pour objet un joint ainsi défini, dans lequel la jupe est terminée par un rebord perpendiculaire pour délimiter conjointement avec la seconde face de contact et la jupe une section ayant une forme correspondant à celle de la lettre U.

L'invention a également pour objet une boîte à gant comportant une structure porteuse délimitant une ouverture fermée par un panneau pressé contre un profilé délimitant cette ouverture, avec un joint ainsi défini interposé entre le panneau et le profilé.

### BRÈVE DESCRIPTION DES DESSINS

La figure 1 déjà décrite est une vue en coupe transversale d'un agencement de fixation de panneau de boîte à gant connu de l'Etat de la technique ;
La figure 2 déjà décrite est une vue en perspective d'un agencement de fixation de panneau de boîte à gant connu de l'Etat de la technique ;
La figure 3 est une vue en coupe transversale d'un agencement de fixation avec un joint selon l'invention ;
La figure 4 est une vue en coupe transversale d'un joint selon l'invention représenté seul ;
La figure 5 est une vue en coupe transversale d'un agencement de fixation avec un joint selon une variante de l'invention ;
La figure 6 est une vue en coupe transversale d'un agencement comprenant un joint selon une autre variante de l'invention ;
La figure 7 est une vue en coupe transversale d'un joint selon l'autre variante de l'invention représenté seul ;
La figure 8 est une vue en coupe transversale d'un agencement de fixation monté avec un joint selon l'autre variante de l'invention.

### EXPOSÉ DÉTAILLÉ DE MODES DE RÉALISATION PARTICULIERS

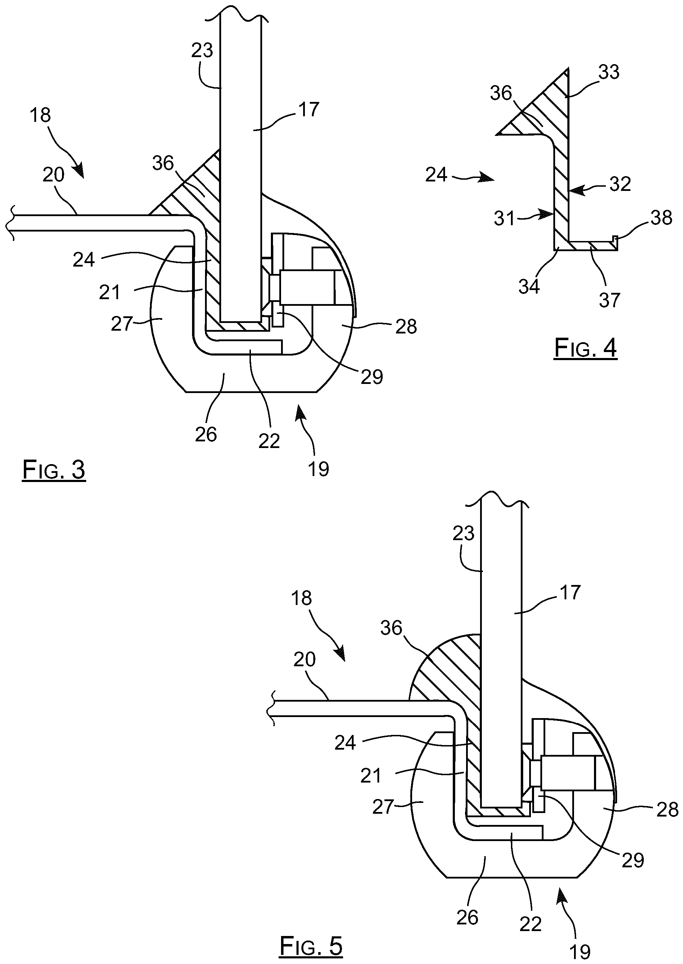

Sur la figure 3, on a représenté un assemblage selon l'invention, dans lequel un panneau 17 est plaqué contre un profilé 18 d'une structure porteuse par des barrettes serre-joints 19. Ce profilé 18 a une section transversale comprenant un corps 20 prolongé par un flanc d'appui 21 s'étendant à angle droit par rapport au corps 20, et terminé par un rebord 22 replié à angle droit par rapport à ce flanc et par là même parallèle au corps 20. Le panneau 17 a sa face interne 23 plaquée contre le flanc d'appui 21, par l'intermédiaire d'un joint 24, l'ensemble étant comprimé par la barrette serre-joint 19.

Cette barrette 19 présente une section transversale en forme de U comprenant une base 26 prolongée par deux flancs parallèles 27, 28. Lorsque l'ensemble est monté, la base 26 est en vis-à-vis du rebord 22, le flanc fixe 27 est en appui sur le flanc d'appui 21 du profilé, et le flanc de serrage 28 de la barrette 19 est en vis-à-vis du panneau 17.

Ce flanc de serrage 28 comporte du côté de sa face interne un tampon d'appui ou contre-cadre 29 porté par des vis de serrage traversant ce flanc de serrage 28, pour répartir uniformément l'effort de serrage des vis sur le panneau.

Le joint d'étanchéité 24 a une forme générale rectangulaire dont les dimensions correspondent aux dimensions du pourtour du panneau rectangulaire 17. Ce joint 24 comporte une première face de contact repérée par 31 sur la figure 4 et venant en appui sur le profilé 18, et une seconde face de contact repérée par 32 sur la figure 4, parallèle à la première et venant en appui contre la face interne 23 du panneau 17 tout le long de son pourtour.

Ce joint 24 comporte un bord circonférentiel intérieur 33 et un bord circonférentiel extérieur 34 séparés l'un de l'autre d'une distance constituant sa largeur qui correspond sensiblement à la largeur du flanc d'appui 21, de façon à couvrir la majorité de ce flanc 21 lorsque l'ensemble est en place.

Comme visible sur la figure 4, le bord intérieur 33 est pourvu d'un éperon 36 ou excroissance visible aussi sur la figure 3, présentant une section sensiblement triangulaire, qui dépasse significativement au-delà de sa première face 31, de manière à combler la région correspondant à la rigole interne de l'Etat de la technique.

Grâce à cet éperon ou rebord interne 36, lorsque l'ensemble est en place comme sur la figure 3 ou 5, il n'existe pas de rigole interne susceptible de former une niche de rétention dans laquelle pourrait s'accumuler de la matière radioactive. Il n'est donc pas nécessaire de prévoir l'ajout et le retrait d'un adhésif couvrant l'angle délimité par le corps 20 du profilé et par la face interne du panneau, comme c'était le cas dans l'Etat de la technique.

Dans l'exemple des figures 3 et 4, l'éperon présente une section triangulaire, mais il est aussi avantageux de lui donner une section en forme de quart de rond, comme illustré sur la figure 5. Cette forme en quart de rond facilite la mise en place du panneau avec son joint sans risque d'accrochage du joint durant sa manutention et durant le positionnement de l'ensemble. Autrement dit, cette forme en quart de rond donne au joint une plus grande rigidité qui évite notamment le rebroussement de son rebord. Cette forme en quart de rond du rebord 36 permet en outre de faciliter le nettoyage du joint lorsqu'il est en place dans l'enceinte, au cours par exemple d'une opération de maintenance de la boîte à gant.

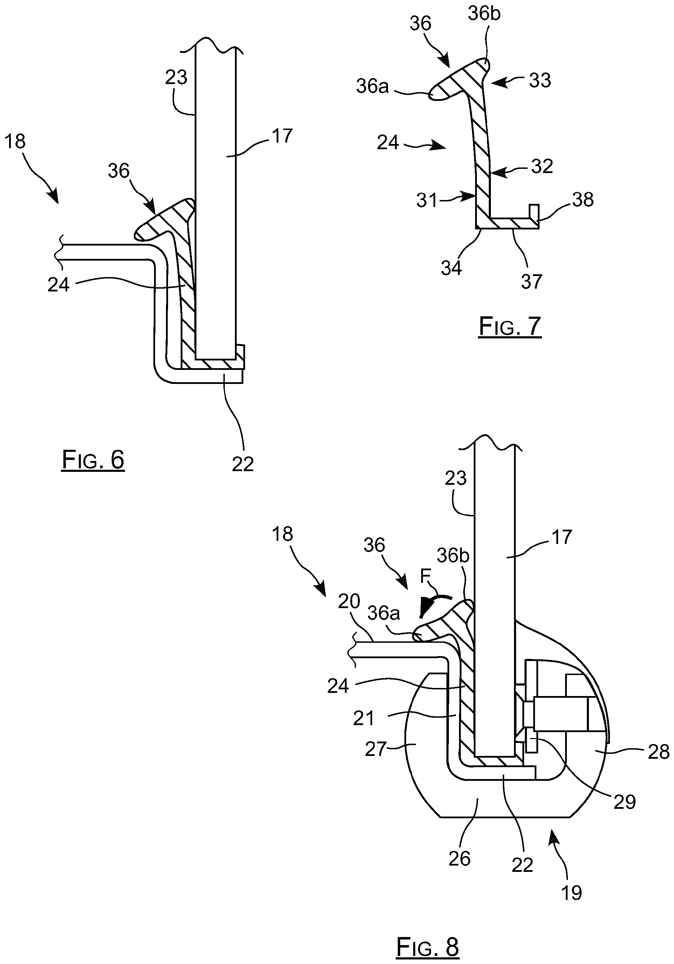

Une autre possibilité pour limiter le rebroussement du rebord du joint lors du montage de l'ensemble consiste à donner à l'éperon ou rebord interne 36 une forme correspondant à celle de la lettre T. Dans cette configuration représentée sur les figures 6 à 8, le bord circonférentiel intérieur 33 du joint comprend un éperon 36 ayant une première branche ou lèvre 36a dépassant de sa première face de contact 31 et une seconde branche ou lèvre 36b dépassant de sa seconde face de contact 32.

Dans ce cas, lorsque le panneau 17 est rapproché et plaqué vers le flanc d'appui 21 alors que le joint est installé, ce panneau 17 appuie en premier lieu sur la seconde lèvre 36b dépassant de la seconde face de contact 32. Cet appui fait basculer l'éperon 36, selon la flèche F sur la figure pour abaisser la première lèvre 36a vers le corps du profilé 18, sans risque de rebroussement de cette première lèvre.

Complémentairement, le bord circonférentiel extérieur 34 est prolongé par une jupe 37 qui dépasse au-delà de sa seconde face de contact 32, c'est-à-dire selon une direction opposée à celle de l'éperon 36, en longeant le bord extérieur 34 sur toute la circonférence du joint. Cette jupe 37 est terminée par un rebord perpendiculaire 38 s'étendant parallèlement aux faces 31 et 32, de sorte que le corps de joint avec la jupe et son rebord 38 délimitent conjointe une section en forme de U.

Comme visible sur les figures 3 et 5, cette jupe 37 permet au joint 24, lorsqu'il est en place, d'entourer le bord du panneau 17 tout en l'enserrant, c'est-à-dire de se maintenir seul fixé au panneau avec un positionnement précis, sans qu'il faille prévoir une colle. Autrement dit, lors du remplacement d'un ancien panneau par un nouveau panneau, le nouveau panneau peut aisément être prééquipé d'un nouveau joint positionné avec précision et fermement maintenu au panneau, ce qui facilite la mise en place de ce nouveau panneau après dépose de l'ancien.

Dans l'exemple qui a été décrit, l'invention a été présentée pour une boîte à gant destinée à la manipulation de matières nucléaires, mais elle peut s'appliquer à d'autres domaines, comme notamment le domaine hospitalier. Elle peut s'appliquer au domaine des couveuses, des travaux sur des virus ou sur des agents chimiques ou bactériologiques.

## Revendications

1. Joint d'étanchéité (24) et de montage d'un panneau (17) rectangulaire sur une structure porteuse d'une boîte à gant, comprenant une première face de contact (31) et une seconde face de contact (32) parallèles l'une à l'autre et destinées à être en appui respectivement contre un profilé (18) de la structure porteuse de la boîte à gant et contre une face interne (23) du panneau (17), ce joint (24) comprenant un bord circonférentiel intérieur (33) pourvu d'un rebord (36) dépassant au-delà de la première face (31), et un bord circonférentiel extérieur (34) prolongé par une jupe (37) s'étendant perpendiculairement à la seconde face de contact (32) en dépassant au-delà de cette seconde face de contact (32) pour entourer et enserrer la tranche du panneau (17) sur toute sa circonférence.

2. Joint selon la revendication 1, dans lequel le rebord (36) a une forme de quart de rond.

3. Joint selon la revendication 1, dans lequel le rebord (36) comprend une première lèvre (36a) dépassant de la première face de contact (31) et une seconde lèvre (36b) dépassant de la seconde face de contact (32).

4. Joint selon la revendication 3, dans lequel la jupe (37) est terminée par un rebord perpendiculaire (38) pour délimiter conjointement avec la seconde face de contact (32) et la jupe (37) une section ayant une forme correspondant à celle de la lettre U.

5. Boîte à gant comportant une structure porteuse incluant une ouverture fermée par un panneau (17) pressé contre un profilé délimitant cette ouverture, avec un joint (24) selon l'une des revendications précédentes interposé entre le panneau (17) et le profilé.

## Patentansprüche

1. Dichtung (24) zum Abdichten und Montieren einer rechteckigen Platte (17) an einer Tragstruktur eines Handschuhkastens, mit einer ersten Kontaktfläche (31) und einer zweiten Kontaktfläche (32), die parallel zueinander verlaufen und dazu bestimmt sind, sich jeweils gegen ein Profil (18) der Tragstruktur des Handschuhkastens und gegen eine Innenfläche (23) der Platte (17) abzustützen, wobei diese Dichtung (24) einen inneren Umfangsrand (33), der mit einem über die erste Fläche (31) hinausragenden Flansch (36) versehen ist, und einen äußeren Umfangsrand (34) aufweist, der sich mit einer Schürze (37) fortsetzt, die sich senkrecht zur zweiten Kontaktfläche (32) erstreckt und über diese zweite Kontaktfläche (32) hinausragt, um die Randkante der Platte (17) über ihren gesamten Umfang zu umgeben und einzuklemmen.

2. Dichtung nach Anspruch 1, wobei der Flansch (36) viertelkreisförmig ist.

3. Dichtung nach Anspruch 1, wobei der Flansch (36) eine erste Lippe (36a), die von der ersten Kontaktfläche (31) vorsteht, und eine zweite Lippe (36b), die von der zweiten Kontaktfläche (32) vorsteht, aufweist.

4. Dichtung nach Anspruch 3, wobei die Schürze (37) mit einem senkrechten Flansch (38) endet, um zusammen mit der zweiten Kontaktfläche (32) und der Schürze (37) einen Querschnitt zu begrenzen, der eine Form hat, die der des Buchstabens U entspricht.

5. Handschuhkasten mit einer Tragstruktur, die eine Öffnung aufweist, die durch eine Platte (17) verschlossen ist, die gegen ein Profil gepresst ist, das diese Öffnung begrenzt, enthaltend eine Dichtung (24) nach einem der vorangehenden Ansprüche, die zwischen der Platte (17) und dem Profil eingefügt ist.

## Claims

1. Seal (24) and installation of a rectangular panel (17) on a supporting structure of a glove box, comprising a first contact face (31) and a second contact face (32) parallel to each other and designed to come into contact with a profile (18) of the glove box supporting structure and against an internal face (23) of the panel, this seal (24) comprising an internal circumferential edge (33) provided with a rim (36) projecting beyond the first face (31), and an external circumferential edge (34) prolonged by a skirt (37) extending perpendicular to the second contact face (32) projecting beyond this second contact face (32) to surround and clamp the edge of the panel (17) around its entire circumference.

2. Seal according to claim 1, in which the rim (36) has a quarter-round shape.

3. Seal according to claim 1, in which the rim (36) comprises a first lip (36a) projecting from the first contact face (31) and a second lip (36b) projecting from the second contact face (32).

4. Seal according to claim 3, in which the skirt (37) is terminated by a perpendicular rim (38) to jointly delimit a section with a shape like the letter U, with the second contact face (32) and the skirt (37).

5. Glove box comprising a supporting structure including an opening closed by a panel (17) pressed into contact with a profile delimiting this opening, with a seal (24) according to any one of the above claims inserted between the panel (17) and the profile.
